(19) Europäisches Patentamt
European Patent Office
Office européen des brevets

(11) EP 3 616 503 A1

(12) EUROPEAN PATENT APPLICATION
published in accordance with Art. 153(4) EPC

(43) Date of publication:
04.03.2020 Bulletin 2020/10

(51) Int Cl.:
A01G 25/02 (2006.01)

(21) Application number: 18814247.5

(22) Date of filing: 28.05.2018

(86) International application number:
PCT/JP2018/020360

(87) International publication number:
WO 2018/225561 (13.12.2018 Gazette 2018/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.06.2017 JP 2017111774

(71) Applicant: Enplas Corporation
Kawaguchi-shi, Saitama 332-0034 (JP)

(72) Inventors:
• YANAGISAWA, Kazuma
  Kawaguchi-shi, Saitama 332-0034 (JP)
• TAKAHASHI, Atsushi
  Kawaguchi-shi, Saitama 332-0034 (JP)

(74) Representative: J A Kemp LLP
14 South Square
Gray's Inn
London WC1R 5JJ (GB)

(54) **EMITTER, AND DRIP IRRIGATION TUBE PROVIDED WITH SAME**

(57) The present invention aims to provide an emitter and a drip irrigation tube that can suppress the variations in the discharge amount of the liquid in the drip irrigation tube. The emitter (120) of the present invention is an emitter for regulating discharge of irrigation liquid. The emitter (120) includes an intake portion for taking in the liquid in the tube (110); a regulating unit that regulates a discharge amount of the liquid; a discharge portion for discharging the liquid via a discharge port (112) of the tube (110); and a flow path communicating the intake portion and the regulating unit. The regulating unit includes a recess and a film, the film is fixed in a state of covering an inner space of the recess, a region of the film covering the inner space of the recess is a diaphragm portion, the recess has a through hole communicating with the discharge portion and a plurality of slits communicating with the through hole, and an edge portion forming an upper surface-side opening of the through hole, excluding the plurality of slits, is a valve seat portion. When the diaphragm portion of the film comes into contact with the valve seat portion, the film and the slits form communication ports to the through hole, and each slit serves as a flow path to the through hole. The emitter (120) satisfies condition (1):

Condition (1): Assuming a cross-sectional area of the communication port formed by the film and the slit required when the emitter has one slit to be 1, a cross-sectional area of a communication port to the through hole formed by the film and each slit is less than 1.

FIG. 1A

FIG. 1B

# Description

TECHNICAL FIELD

The present invention relates to an emitter and a drip irrigation tube provided with the same.

BACKGROUND ART

In the cultivation of plants, drip irrigation is known. The drip irrigation method is a method in which a tube for drip irrigation is arranged in the soil, and irrigation liquids such as water and liquid fertilizer are dripped from the tube to the soil. In recent years, problems such as the desertification due to global warming and the depletion of water resources have arisen, and the drip irrigation method has attracted particular attention because it is possible to minimize the consumption of irrigation liquids.

The drip irrigation tube usually includes a tube having a plurality of through holes through which irrigation liquid is discharged, and a plurality of emitters (also referred to as "drippers") for discharging irrigation liquid from each of the through holes. As a type of emitter, for example, an emitter used by being connected to the inner wall of the tube is known (for example, see Patent Literature 1).

The emitter includes an intake portion for taking in the liquid from the tube, a decompression flow path for flowing a liquid in the emitter while decompressing the liquid, and a regulating unit that regulates a discharge amount of the liquid that has been flowed through the decompression flow path to be discharged from the tube via the emitter, in accordance with a pressure of the liquid in the tube. A diaphragm that deforms in response to the pressure of the liquid in the tube is used as the regulating unit, and a film having elasticity such as a silicone rubber film or the like is used as the diaphragm.

Since the emitter can regulate the discharge amount in accordance with the pressure in the tube, for example, even when the pressure of the liquid flowing in the tube fluctuates or the pressure of the liquid differs depending on the position in the tube, it is possible to discharge the liquid without variation.

Citation List

Patent Literature

Patent Literature 1: JP 2010-046094 A

SUMMARY OF INVENTION

Technical Problem

However, the inventors of the present invention have newly found that the discharge amount varies depending also on the temperature of the liquid in the tube.

It is therefore an object of the present invention to provide an emitter and a drip irrigation tube that can suppress the variations in the discharge amount of the liquid caused by the temperature of the liquid in the drip irrigation tube.

Solution to Problem

In order to achieve the above object, the present invention provides an emitter to be disposed on an inner wall of a tube including a discharge port, for regulating discharge of irrigation liquid from an inside of the tube to an outside of the tube via the discharge port, including:

an intake portion for taking in the liquid in the tube;
a regulating unit that regulates a discharge amount of the liquid taken in;
a discharge portion for discharging the taken-in liquid via the discharge port of the tube; and
a flow path communicating the intake portion and the regulating unit, wherein
the regulating unit includes:

a recess; and
a film,
the film is fixed in a state of covering an inner space of the recess,
a region of the film covering the inner space of the recess is a diaphragm portion,
the recess has a through hole communicating with the discharge portion and a plurality of slits communicating with the through hole,
an edge portion forming an upper surface-side opening of the through hole, excluding the plurality of slits, is a valve seat portion for the film,

in a state where the emitter is disposed in the tube,

when no liquid is present in the tube, the diaphragm portion of the film is not in contact with the valve seat portion, and
when the liquid is present in the tube, the diaphragm portion of the film can be in contact with the valve seat portion in accordance with a pressure of the liquid,

when the diaphragm portion of the film comes into contact with the valve seat portion, the film and the slits form communication ports to the through hole, each slit serving as a flow path to the through hole, and
the emitter satisfies at least one of condition (1) and condition (2).

Condition (1): Assuming a cross-sectional area of the communication port formed by the film and the slit required when the emitter has one slit to be 1, a cross-sectional area of a communication port to the through hole formed by the film and each slit is less than 1. Condition (2): A Reynolds number of each flow path to the through hole is 1500 or less.

The present invention also provides a drip irrigation tube including:

a tube; and
an emitter, wherein
the emitter is the emitter according to the present invention,
the tube includes a discharge port for discharging an irrigation liquid,
the emitter is disposed on an inner wall of the tube at a site including the discharge port, and
the discharge portion of the emitter and the discharge port of the tube correspond to each other.

Advantageous Effects of Invention

According to the emitter and the drip irrigation tube of the present invention, it is possible to suppress the variations in the discharge amount of the liquid caused by the temperature of the liquid in the drip irrigation tube.

BRIEF DESCRIPTION OF DRAWINGS

[Figs. 1A and 1B] Figs. 1A and 1B are cross-sectional views each schematically showing a drip irrigation tube in the first embodiment.
[Figs. 2A and 2B] Figs. 2A and 2B are perspective views of an emitter according to the first embodiment.
[Figs. 3A to 3C] Figs. 3A to 3C are plan views of the emitter according to the first embodiment.
[Figs. 4A to 4C] Figs. 4A to 4C are cross-sectional views of the emitter according to the first embodiment.
[FIG. 5] FIG. 5 is a schematic diagram for explaining the operation of the emitter according to the first embodiment.
[FIG. 6] FIG. 6 is a plan view of an emitter according to the comparative example.
[Figs. 7A and 7B] Figs. 7A and 7B are schematic diagrams for explaining the operation of the emitter according to the example and the emitter according to the comparative example.

DESCRIPTION OF EMBODIMENTS

The inventors of the present invention have intensively studied the reason why the discharge amount of the emitter varies depending on the temperature of the liquid in the tube, and found the following. The emitter uses the deflection of the diaphragm of the film, which is dependent on the pressure of the liquid, to regulate the discharge amount. However, as the temperature of the liquid passing through the tube becomes relatively high, depending on the temperature, the tensile modulus of the diaphragm becomes relatively low. Thus, it has been found that, even if the pressure of the liquid is the same, for example, the diaphragm, which is not so deflected at the liquid temperature on the low temperature side (for example, about 23°C), is deflected at the liquid temperature on the high temperature side (for example, about 40°C), thereby decreasing the discharge amount. Hence, the inventors of the present invention have conceived that the negative temperature dependence of the diaphragm, which is given to the discharge amount, is cancelled by using the positive temperature dependence, to prevent the discharge amount from decreasing. Specifically, the liquid flow includes a "laminar flow" in which the liquid moves regularly and a "turbulent flow" in which the liquid moves irregularly, and the turbulent flow is almost independent of the liquid temperature, whereas the laminar flow is dependent on the liquid temperature, and the flow rate increases as the liquid temperature increases. Therefore, the communication port or the flow path for the liquid to flow into the through hole in the regulating unit of the emitter is formed under the above-described conditions to make the flow of the liquid from the flow path to the through hole via the communication port in the regulating unit a laminar flow, and the discharge amount decreased by the negative temperature dependence of the diaphragm is compensated by the positive temperature dependence of the laminar flow, thereby suppressing the decrease of the discharge amount. Thus, the emitter of the present invention can suppress the influence of the temperature of the liquid in the tube and prevent the discharge amount from decreasing.

In the emitter of the present invention, for example, the diaphragm portion is made of thermoplastic resin.

In the emitter of the present invention, for example, the thermoplastic resin is polyethylene.

In the emitter of the present invention, for example, as to the through hole communicating with the discharge port, the periphery of the upper surface-side opening of the through hole may protrude upward. Hereinafter, the protruding region is also referred to as a "cylindrical region" around the through hole. In this case, in the cylindrical region, for example, the upper surface of the protrusion has the slit in a part thereof, and the inner edge portion of the upper surface of the protrusion excluding the slit is a valve seat portion for the film.

The emitter and the drip irrigation tube of the present invention are characterized in that they satisfy at least one of the conditions (1) and (2), and other configurations are not particularly limited.

In the present invention, an emitter satisfying the condition (1) can also be referred to as an emitter satisfying the condition (2), and the emitter satisfying the condition (2) includes, for example, the emitter satisfying the condition (1).

An embodiment of the emitter and the drip irrigation tube including the same of the present invention will be described with reference to the drawings. The emitter and the drip irrigation tube of the present invention are not limited or restricted in any way by the embodiment described below. In each of the drawings, identical parts are indicated with identical reference signs. In each of the drawings, for convenience in explanation, the structure of each component may be appropriately simplified, and the size, the ratio, and the like of components are not limited to the conditions in the drawing.

In each of the drawings, for convenience sake, "the axial direction of the tube" denotes the direction connecting the openings at both ends of the tube and "the vertical direction of the tube" denotes the direction perpendicular to the axial direction and also the plumb direction when the tube is placed on the table, unless otherwise stated. In each of the drawings, for convenience sake, the emitter is shown in a state where it is disposed on the inner wall in the downward direction of the tube, unless otherwise stated. In each of the drawings, for convenience sake, as to the vertical direction of the emitter, the opening side of the recess (the side on which the film is disposed) is referred to as the upward direction, the bottom surface side of the recess is referred to as the downward direction, the upward direction of the emitter is also referred to as the front surface side of the emitter, and the downward direction of the emitter is also referred to as the back surface side of the emitter, unless otherwise stated. The height of the emitter denotes the length in the vertical direction, the length of the emitter denotes the length in the longitudinal direction (direction along the axial direction of the tube), and the width of the emitter denotes the length in the direction perpendicular to the vertical direction and the longitudinal direction (also referred to as the lateral direction or the width direction). In the emitter, the decompression region of the flow path is shown in a state of extending in the longitudinal direction.

[First embodiment]

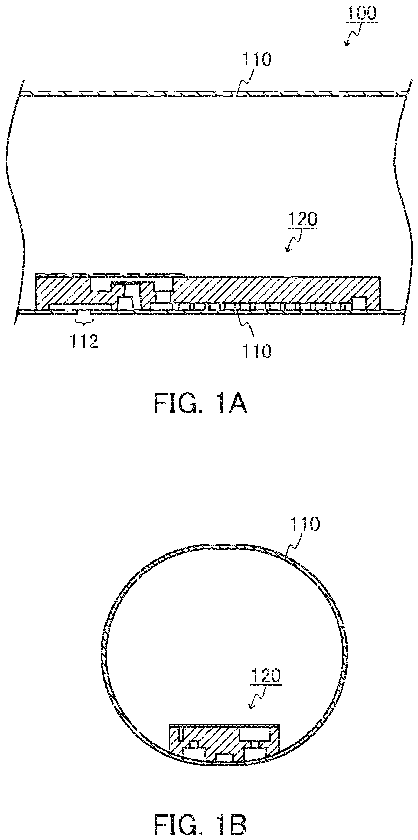

Figs. 1A and 1B are schematic views each showing the state where the emitter is disposed in the drip irrigation tube. FIG. 1A is a cross-sectional view in the axial direction and the vertical direction of the tube, and FIG. 1B is a cross-sectional view in the direction perpendicular to the axial direction of the tube. The emitter of the first embodiment has the cylindrical region around the upper surface-side opening of the through hole. The present invention, however, is not limited thereto, and the emitter may not have the cylindrical region.

Hereinafter, the configurations of the drip irrigation tube and the emitter will be described, and thereafter the functions and effects thereof will be described.

A drip irrigation tube 100 will be described. As shown in FIGs. 1A and 1B, the drip irrigation tube 100 includes a tube 110 and a plurality of emitters 120, and the emitters 120 are disposed inside the tube 110 on the inner wall thereof.

The tube 110 is a hollow tube for allowing an irrigation liquid to flow therethrough. The material for the tube 110 is not particularly limited, and is, for example, polyethylene. The tube wall of the tube 110 has a plurality of through holes 112 at predetermined intervals (e.g., 200 to 500 mm) in the axial direction of the tube 110. The through hole 112 is a discharge port 112 for discharging the liquid inside the tube 110 to the outside of the tube 110. The shape and size of the hole of the discharge port 112 are not particularly limited as long as the liquid can be discharged. The shape of the hole of the discharge port 112 is, for example, a circle, and the diameter thereof is, for example, 1.5 mm.

A plurality of emitters 120 are disposed on the inner wall of the tube 110 at positions corresponding to the discharge ports 112. The shape and area of the cross-section in the direction perpendicular to the axial direction of the tube 110 is not particularly limited as long as the emitter 120 can be disposed therein.

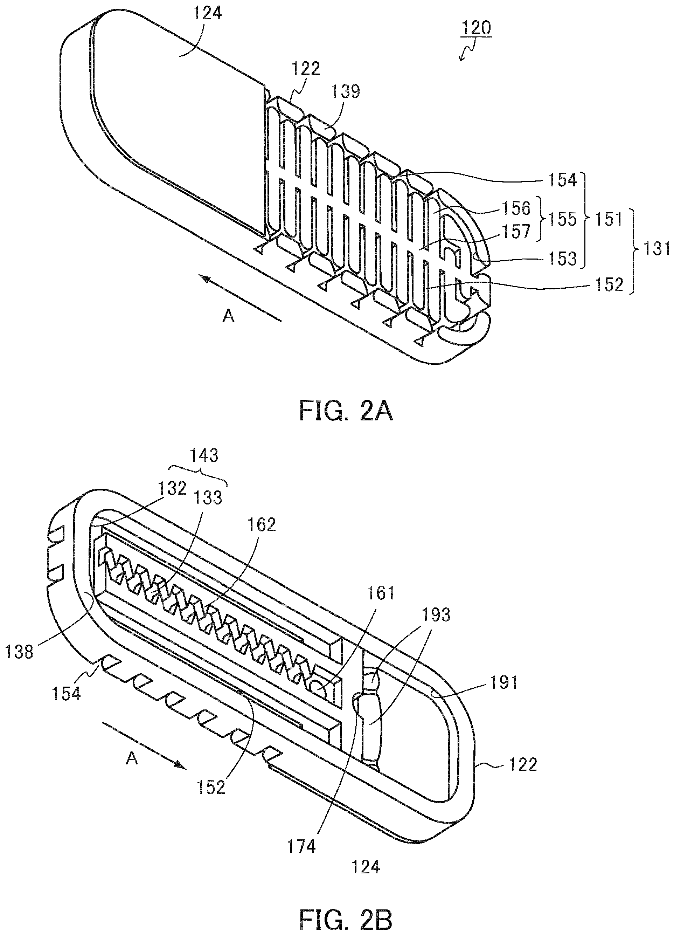

In use of the drip irrigation tube 100, the emitter 120 only is required to be disposed so as not to be detached from the tube 110, for example. The emitter 120 is connected to the tube 110, for example, and the drip irrigation tube 100 can be produced by connecting a back surface (138 in FIG. 2 described below) of the emitter 120 to the inner wall of the tube 110, for example. The method of connecting the tube 110 and the emitter 120 is not particularly limited, and may be, for example, welding of a resin material constituting the emitter 120 or the tube 110, bonding with an adhesive, or the like. In the drip irrigation tube 100, the discharge port 112 may be formed, for example, before or after disposing the emitter 120 in the tube 110.

Next, the emitter 120 will be described. Here, the front surface side of the emitter 120 is the side of the emitter 120 facing the inner space of the tube 110 when it is disposed in the tube 110, and the back surface side of the emitter 120 is the side of the emitter 120 facing the inner wall of the tube 110 when it is disposed in the tube 110.

Figs. 2A and 2B are perspective views each schematically showing the emitter 120. FIG. 2A is a perspective view of the emitter 120 seen from the front surface 139 side, and FIG. 2B is a perspective view of the emitter 120 seen from the back surface 138 side. For convenience sake, in the longitudinal direction of the emitter 120, the side on which a film 124 is not disposed is referred to as an upstream side, and the side on which the film 124 is disposed is referred to as a downstream side. The upstream side and downstream side are not intended to indicate the flow of liquid in the emitter 120, and are merely definitions for convenience in explanation. In each of Figs. 2A and 2B, the direction of the emitter 120 is indicated by the arrow A, and the opposite to the arrowhead side of the arrow indicates the upstream side and the arrowhead side of the arrow indicates the downstream side (hereinafter, the same applies).

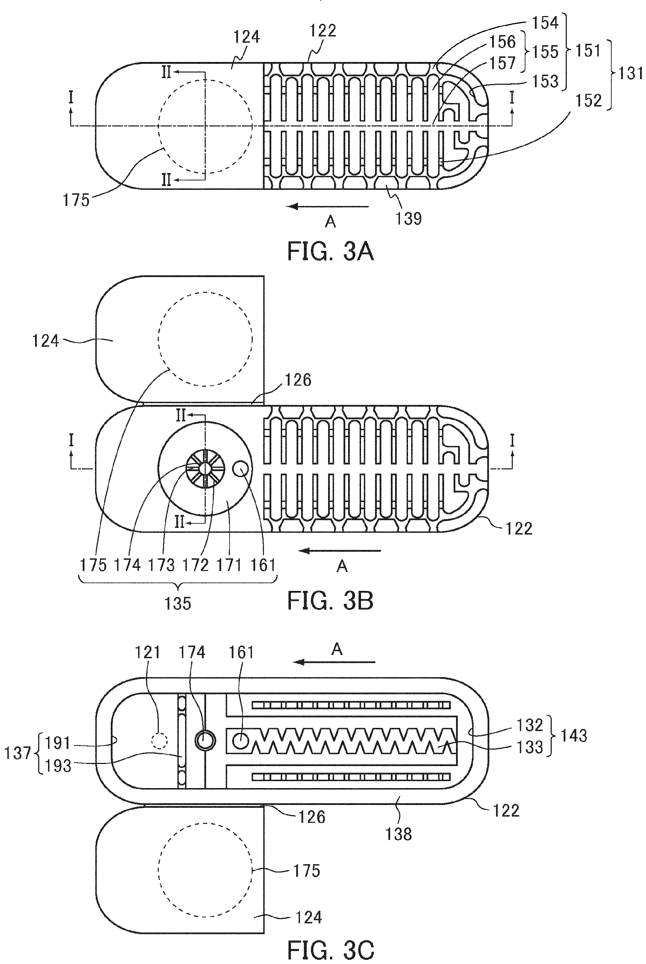

Figs. 3A to 3C are plan views each schematically showing the emitter 120. FIG. 3A is a top view (plan view of the front surface side) of the emitter 120, and Figs. 3B and 3C are schematic views each showing the emitter 120 in a state in which the film 124 is connected to an emitter body 122 excluding the film 124 via a hinge portion 126 before the film 124 is disposed on the emitter body 122. Specifically, FIG. 3B is a plan view seen from the front surface side, and FIG. 3C is a plan view seen from the back surface side.

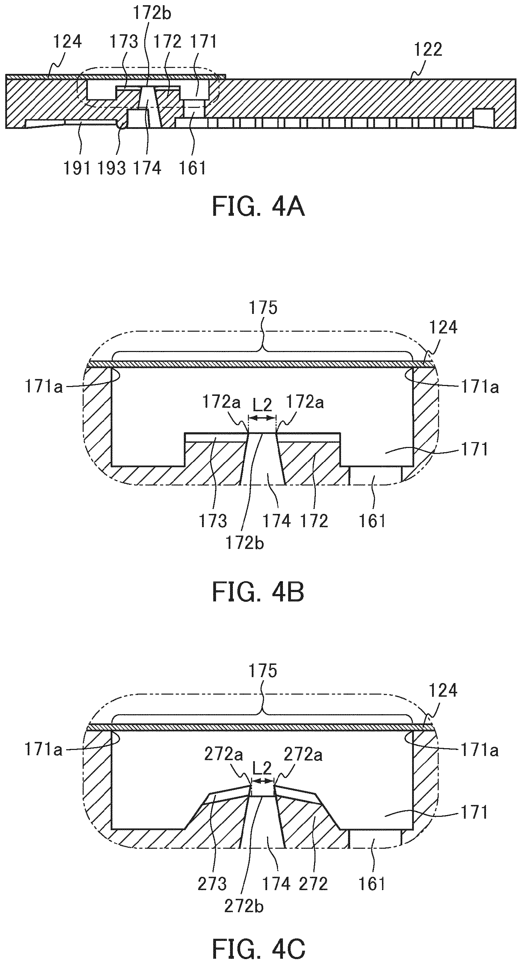

Figs. 4A to 4C are cross-sectional views each schematically showing the emitter 120. FIG. 4A is a cross-sectional view taken along the line I-I in FIG. 3A, FIG. 4B is a partial cross-sectional view of the region surrounded by the dotted line in FIG. 4A, i.e., a partial cross-sectional view in the vicinity of a regulating unit 135.

As shown in Figs. 1A and 1B, the emitter 120 is disposed inside the tube on the inner wall thereof in a state of covering the discharge port 112. The overall shape of the emitter 120 is not particularly limited as long as, for example, the emitter 120 can be in close contact with the inner wall of the tube 110 to cover the discharge port 112. In the present embodiment, the planar shape of the emitter 120 is, for example, a substantially rectangular shape with four corners chamfered by R. The back surface 138 of the emitter 120 being in contact with the inner wall of the tube 110 includes a protrusion in the cross-section in the direction perpendicular to the axial direction of the tube, and the protrusion has a substantially arc shape toward the inner wall of the tube 110 so as to be along the inner wall of the tube 110. The overall size of the emitter 120 is not particularly limited, and for example, the length in the longitudinal direction may be 25 mm, the length in the lateral direction may be 8 mm, and the height in the vertical direction may be 2.5 mm.

The emitter 120 is formed by disposing the film 124 on the emitter body 122. The film 124 and emitter body 122 may be connected to each other via the hinge portion 126, for example, as shown in Figs. 3A and 3B, or the emitter body 122 and film 124 may be integrally molded. In this case, the film 124 may be rotated to the emitter body 122 side about the hinge portion 126 as an axis and may be disposed and fixed on the emitter body 122. The hinge portion 126 may be cut and removed, for example, after the film 124 is fixed to the emitter body 122. The thicknesses of the film 124 and the hinge portion 126 are not particularly limited, and are, for example, the same. The thickness of the film 124 is not particularly limited, and is, for example, 0.3 mm.

The emitter body 122 and the film 124 may be formed separately, and then the film 124 may be disposed and fixed on the emitter body 122, for example. The method of fixing the film 124 to the emitter body 122 is not particularly limited, and may be, for example, welding of a material constituting the emitter body 122 or the film 124, bonding with an adhesive, or the like. The site of the film 124 to be fixed to the emitter body 122 is not particularly limited, and is, for example, a region outside the diaphragm portion of the film 124.

The emitter body 122 preferably has flexibility, for example, and is preferably formed of a flexible material. Since the film 124 includes a diaphragm portion, as will be described below, the film 124 is preferably flexible and formed of a flexible material. The flexible material can be, for example, a thermoplastic resin. The emitter body 122 and the film 124 may be formed of the same material, or may be formed of different materials, for example, and are preferably formed of the same material when they are integrally formed as described above. The flexible material may include, for example, one type or two or more types. The flexible material may be, for example, a resin, a rubber, or the like, and the resin may be, for example, polyethylene, silicone, or the like. The thermoplastic resin can be, for example, polyethylene. The flexibility of the emitter body 122 or the film 124 can be adjusted, for example, by the use of an elastic material such as an elastic resin. The method of adjusting the flexibility is not particularly limited, and includes, for example, selection of an elastic resin, adjustment of a mixing ratio of the elastic material to a hard material such as a hard resin, and the like.

The emitter 120 includes an intake portion 131, a regulating unit 135, a discharge portion 137, and a flow path 143. In the emitter 120, for example, the upstream side is a region having the intake portion 131, the downstream side is a region having the regulating unit 135 and the discharge portion 137, and these regions communicate with each other via the flow path 143.

The intake portion 131 is a portion for introducing the liquid in the tube 110 into the emitter 120, and is provided on the front surface 139 side of the emitter 120. When the border between the front surface 139 side of the emitter 120 and the back surface 138 side of the emitter 120 is the base of the emitter 120, as shown in Figs. 2A, 3A, and 3B, the base of the emitter body 122 has, at its outer edge, a protruded outer wall protruding upward to form an intake recess 153 on the upstream side of the emitter 120. The outer wall of the intake recess 153 has a plurality of slits 154. The base of the emitter 120 includes a first protrusion 157 extending in the longitudinal direction and a plurality of second protrusions 156 extending toward both ends in the lateral direction in the inner region of the intake recess 153. The base of the emitter 120, i.e., the bottom surface of the intake recess 153, has a pair of intake through holes 152 communicating with the back surface 138 side in the longitudinal direction orthogonal to the plurality of second protrusions 156 extending toward both ends in the lateral direction. In the emitter 120, the intake recess 153, the slit 154 of the outer wall, and a protrusion group 155 (first protrusion 157 and second protrusion 156) allow the liquid to flow into the emitter 120 and prevent suspended matters in the liquid from entering and thus are also referred to as a screen portion 151, for example, as will be described below. The screen portion 151 and the pair of intake through holes 152 serve as the intake portion 131 in the emitter 120.

The depth of the intake recess 153 surrounded by the outer wall is not particularly limited, and can be appropriately determined depending on the size of the emitter 120, for example.

The shape of the slit 154 in the outer wall is not particularly limited and is preferably in a shape that prevents the suspended matters from entering, as described above. In Figs. 2A and 3A, the slit 154 has a shape such that the width gradually increases from the outer side surface toward the inner side surface at the outer wall of the intake recess 153. The slit 154 has preferably, for example, such a wedge wire structure. In the case where the slit 154 has the above-described structure, for example, the pressure loss of the liquid flowing into the emitter 120 can be suppressed in the intake recess 153.

The position and number of protrusion groups 155 are not particularly limited and preferably are the position and number that allow the liquid to flow into the emitter 120 and prevent suspended matters in the liquid from entering as described above. The second protrusion 156 has a shape such that the width gradually decreases from the front surface 139 of the emitter body 122 toward the bottom surface of the intake recess 153, for example. That is, it is preferable that the spaces between the adjacent second protrusions 156 of the plurality of second protrusions 156 in the arrangement direction have a so-called wedge wire structure. When the space between the second protrusions 156 has the above-described structure, for example, the pressure loss of the liquid flowing into the intake recess 153 can be suppressed. The distance between the adjacent second protrusions 156 is not particularly limited, and is preferably the distance that allows the above-mentioned function to be exhibited, for example.

For example, similarly to the second protrusion 156, the first protrusion 157 may have a shape such that the width gradually decreases from the front surface 139 of the emitter body 122 toward the bottom surface of the intake recess 153 or may have a shape such that a certain width is kept from the front surface 139 of the emitter body 122 toward the bottom surface of the intake recess 153.

The shape and number of the pair of intake through holes 152 are not particularly limited, and for example, the shape and number that allow the liquid taken into the intake recess 153 via the screen portion 151 to flow into the emitter 120, i.e., the back surface 138 side of the emitter 120. As described above, each of the pair of intake through holes 152 is a long hole provided along the longitudinal direction orthogonal to the second protrusion 156 in the base (bottom surface of the intake recess 153) of the emitter 120. In Figs. 3A and 3B, while a pair of intake through holes 152 each appear to be a plurality of through holes present along the longitudinal direction because a plurality of second protrusions 156 are present above the long intake through hole 152, the intake through hole 152 is a long hole in the present embodiment as shown in FIG. 2B.

The flow path 143 is a flow path for communicating the intake portion 131 and the regulating unit 135, and is provided on the back surface 138 side of the emitter 120. As shown in Figs. 2B and 3C, on the back surface 138 side of the emitter 120, the base of the emitter 120 has, at its outer edge, a protruded outer wall protruding upward and has a recess surrounded by the outer wall. The emitter 120 has, on the back surface 138 side, a substantially U-shaped groove 132 along the inner side of the outer wall of the recess and a zigzag-shaped groove 133 along the longitudinal direction passing through the center in the lateral direction. In the emitter 120, the groove 132 and the groove 133 serve as the flow path 143. Specifically, when the emitter 120 is disposed in the tube 110, the space between the groove 132 and the groove 133 and the inner wall of the tube 110 serves as the flow path 143. The substantially U-shaped groove 132 is a groove for communicating the pair of intake through holes 152 in the intake portion 131. The zigzag-shaped groove 133 is a groove for communicating the center of the substantially U-shaped groove 132 and a through hole 161 in the base. This zigzag shape allows the pressure of the liquid passing through the emitter 120 to be reduced. Thus, the region of the groove 133 serves as a decompression region 133 in the flow path 143. As will be described below, the through hole 161 in the base is a communication hole to the regulating unit 135.

Since the groove 132 is, for example, a connection portion with the intake portion 131, the groove 132 is also referred to as a connection groove 132, and, in the flow path 143, the region formed by the connection groove 132 is also referred to as a connection region 132. Since the groove 133 connects the connection groove 132 and the regulating unit 135 and can decompress the pressure of the liquid taken therein while allowing the liquid to flow from the connection groove 132 to the regulating unit 135, for example, the groove 133 is also referred to as a decompression groove 133, and, in the flow path 143, the region formed by the decompression groove 133 is also referred to as the decompression region 133.

The decompression region 133 is disposed, for example, on the upstream side of the regulating unit 135. The shape of the decompression region 133 in plan view may be, for example, a zigzag shape as shown in FIG. 2B, a linear shape, or a curved shape. The decompression region 133 preferably has a zigzag shape, for example, so that the function of decompressing the pressure of the liquid passing through the emitter 120 in use can be exhibited. The decompression region 133 has, for example, a plurality of protrusions 162 on its inner side surface, and the plurality of protrusions 162 protrude alternately from both side surfaces toward the center along the direction in which the liquid flows. The protrusion 162 has, for example, a substantially triangular prism shape. For example, in plan view, the protrusion 162 is disposed so that the tip thereof does not exceed the central axis of the decompression region 133.

The regulating unit 135 is a unit that adjusts the discharge amount of the liquid taken into the emitter 120, and is provided on the front surface 139 side of the emitter 120 on the downstream side. As shown in Figs. 2B, 3B, 3C, and 4A, the base of the emitter 120 has the through hole 161 communicating with the flow path 143 in the vicinity of the center thereof, and has a through hole 174 communicating with the discharge portion 137 on the downstream side thereof. The former through hole 161 is a hole for introducing a liquid into a regulating recess 171 and is also referred to as an introduction through hole 161, and the latter through hole 174 is a hole for leading the liquid out of the regulating recess 171 and is also referred to as a regulating through hole or a lead-out through hole. On the front surface 139 side of the emitter 120, the base of the emitter 120 has the regulating recess 171, and the film 124 is fixed in a state of covering the inner space of the regulating recess 171. In the present embodiment, the base is the bottom surface of the regulating recess 171, the bottom surface has the regulating through hole 174 and the introduction through hole 161, and the bottom surface further includes a protruded regulating cylindrical region 172 protruding toward the front surface 139 side around the upper surface-side opening 172b of the regulating through hole 174. Furthermore, as described above, the film 124 is disposed on the front surface 139 side of the emitter body 122 in a state of covering the inside of the regulating recess 171. In the emitter 120, the regulating recess 171, the regulating cylindrical region 172, the film 124 (diaphragm portion 175), and the regulating through hole 174 serve as the regulating unit 135.

The film 124 only is required to be fixed in a state of covering the inner space of the regulating recess 171, and the fixing position thereof is not particularly limited as described above. In the film 124, a region covering the regulating recess 171 is a diaphragm portion 175. That is, the diaphragm portion 175 covers a region surrounded by the inner edge portion 171a of the upper surface of the side wall of the regulating recess 171. In the emitter 120, the inside of the regulating recess 171 is partitioned from the inside of the tube 110 by the diaphragm portion 175 in the film 124.

The shape of the upper surface-side opening 172b of the regulating through hole 174 is defined by the inner edge of the upper surface of the regulating cylindrical region 172. The inner edge of the upper surface of the regulating cylindrical region 172 is a valve seat portion 172a for the film 124. In use, when no liquid is present in the tube 110, the film 124 covering the regulating recess 171 is not in contact with the valve seat portion 172a of the regulating cylindrical region 172. In the same state, for example, the film 124 may be or may not be in contact with the edge portion 171a of the upper surface-side opening in the regulating recess 171. In use, when the liquid is present in the tube 110, the film 124 deforms so as to come into contact (close contact) with the valve seat portion 172a of the regulating cylindrical region 172 in response to the pressure of the liquid in the tube 110. Specifically, as the pressure of the liquid increases, the film 124 deforms so as to be deflected downward. At this time, the film 124, for example, comes into contact with the edge portion 171a of the upper surface-side opening in the regulating recess 171 and then comes into contact with the valve seat portion 172a of the regulating cylindrical region 172. Therefore, in the vertical direction of the emitter 120, the height of the edge portion 171a forming the upper surface-side opening of the regulating recess 171 is higher than the height of the valve seat portion 172a forming the upper surface-side opening 172b of the regulating through hole 174. It is to be noted that the film 124 may be in contact with the edge portion 171a of the upper surface-side opening of the regulating recess 171 in a state where no liquid is present in the tube 110. Hereinafter, the edge portion 171a of the upper surface-side opening in the regulating recess 171 is also referred to as a support portion.

The axial direction of the regulating recess 171 is the direction perpendicular to the bottom surface thereof and is the vertical direction of the emitter 120. The axial direction of the regulating cylindrical region 172 is the same direction as the axial direction of the regulating recess 171, and is the hollow axial direction of the regulating cylindrical region 172.

The shape of the upper surface-side opening 172b of the regulating through hole 174 may be, for example, a circular shape or a polygonal shape, and the regulating cylindrical region 172 may be, for example, a cylindrical shape or a polygonal cylindrical shape.

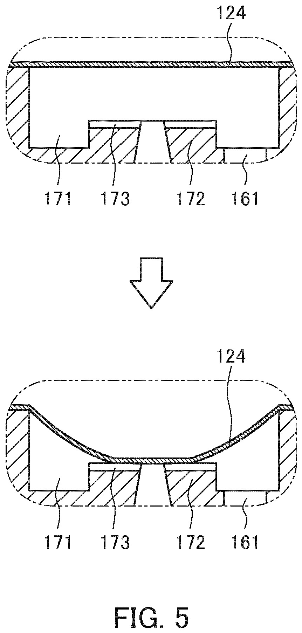

The regulating cylindrical region 172 has a plurality of slits 173 on the upper surface of the protrusion (side wall), and the plurality of slits 173 communicate the inside and the outside of the regulating cylindrical region 172. As shown in the upper diagram of FIG. 5, when the film 124 is not under pressure of the liquid in the tube 110, the film 124 is not in contact with the valve seat portion 172a of the regulating cylindrical region 172. On the other hand, when a pressure is applied to the film 124 by the liquid in the tube 110, as shown in the lower diagram of FIG. 5, the film 124 deflects in the downward direction, and the film 124 comes into contact with the entire circumference of the valve seat portion 172a of the regulating cylindrical region 172. However, even when the film 124 comes into contact with the entire circumference of the valve seat portion 172a of the regulating cylindrical region 172, the plurality of slits 173 in the side wall of the regulating cylindrical region 172 are not closed by the film 124. Thus, the film 124 and the slits 173 form communication ports to the regulating through hole 174 within the valve seat portion 172a, and each slit 173 serves as a flow path to the regulating through hole 174. Therefore, even when the film 124 comes into contact with the entire circumference of the valve seat portion 172a in the regulating recess 171, the liquid introduced into the regulating recess 171 via the introduction through hole 161 further passes through the regulating through hole 174 via the slits 173 (in other words, the liquid passes each slit 173 as a flow path and passes through each communication port formed by each slit 173 and the film), and is sent to the ejection portion 137 to be described below.

For example, the upper surface of the regulating cylindrical region 172 may be parallel to (also can be said as flat with) the bottom surface of the emitter 120 as shown in Figs. 4A and 4B or may be tapered as shown in FIG. 4C. FIG. 4C is the same as FIG. 4B except that the shape of the regulating cylindrical region is different. In FIG. 4C, the upper surface of the regulating cylindrical region 272 extends from the valve seat portion 272a of the upper surface-side opening 272b toward the periphery thereof in a tapered shape, and a plurality of slits 273 are formed on the tapered surface. In the emitter of the present invention, it is preferable that the upper surface is flat, which allows a long flow path to be formed easily by the film 124 and the slit 173 due to, for example, the deflection of the film 124.

The size of the slit 173 is not particularly limited and is only required to satisfy the condition (1). Condition (1): Assuming a cross-sectional area (a) of the communication port formed by the film and the slit required when the emitter has one slit to be 1, a cross-sectional area (b) of a communication port to the through hole formed by the film and each slit is less than 1.

In the emitter of the present invention, each of the communication ports has a shape satisfying the condition (1), whereby the Reynolds number with which the flow of the liquid becomes laminar can be achieved. The Reynolds number of each flow path formed by each slit 173 is, for example, 1500 or less, and preferably, the Reynolds number is 1000 or less, 750 or less, or 500 or less. The Reynolds number (Re) is expressed by the following equation.

$$Re = V \cdot L / \mu$$

    V: flow velocity
    L: representative length
    $\mu$: viscosity coefficient of liquid

In the above equation, the representative length L is expressed by the equation "L = 4 × cross-sectional area / circumferential length". The cross-sectional area is the area of the cross section of the communication port, and the circumferential length is the circumferential length of the cross section of the communication port. When the cross section of the communication port is, for example, a quadrangle and has a width "a" and a height "b", the representative length L can be expressed by the equation "L = 4 × (a × b) / (2a + 2b)".

In the condition (1), assuming the cross-sectional area (a) to be 1, the cross-sectional area (b) is, for example, 0.6 or less, 0.4 or less, or 0.3 or less.

In order to regulate and discharge a freely determined volume of liquid from the emitter (S) having one slit, it is necessary to design the size of the communication port formed by the slit and the film in the regulating unit such that the freely determined volume of liquid can be discharged. In the case where the emitter (P) of the present invention having a plurality of slits is configured as an emitter for regulating a liquid having an equivalent volume, as compared to the emitter (S), by increasing the number of slits and narrowing the flow path formed by each slit, i.e., by reducing the cross-sectional area of the communication port, the Reynolds number is decreased to achieve laminar flow and the discharge of a liquid having an equivalent volume.

In the emitter 120, the number of the slits 173 is not particularly limited, and the lower limit thereof is, for example, 2 or more, 4 or more, or 8 or more, and the upper limit thereof is, for example, 20 or less, 15 or less, or 10 or less. While the emitter having eight slits 173 is shown in FIG. 3B, the present invention is not limited thereto.

The shape of the slit 173 is not particularly limited, and for example, as shown in FIG. 3B, a part of the upper surface of the side wall in the regulating cylindrical region 172 is deleted from the inner side to the outer side of the side wall. The size of the slit 173 is not particularly limited and is only required to satisfy the condition (1). When the slit of the emitter (S) having one slit has a depth of 0.1 to 0.2 mm, the depth of the slit 173 in the emitter 120 of the present embodiment is shallower than that and is, for example, 0.03 to 0.05 mm. When the slit of the emitter (S) having one slit has a width of 0.3 to 0.4 mm, the width of the slit 173 in the emitter 120 of the present embodiment is narrower than that and is, for example, 0.2 to 0.3 mm. The depth of the regulating cylindrical region 172 is not particularly limited and is only required to be deeper than the depth of the slit 173.

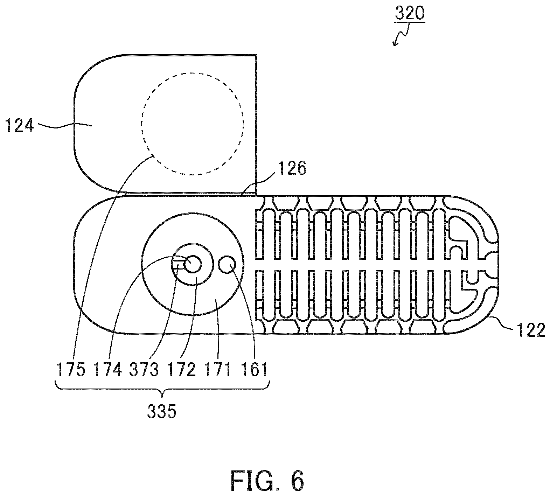

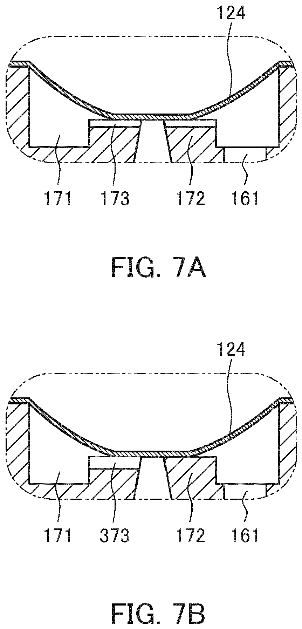

FIG. 6 shows an emitter having one slit as a comparative embodiment. The emitter of FIG. 6 is the same as the emitter 120 of the present embodiment of Figs. 3A to 3C except that it has one slit 373 having a different size from that of the emitter 120. Further, the cross-sectional view of FIG. 7A shows a state in which the film 124 is deflected in the emitter 120 of the present embodiment and is in contact with the valve seat portion 172a of the regulating cylindrical region 172, and the cross-sectional view of FIG. 7B shows a state in which the film 124 is deflected in the emitter of the comparative embodiment and is in contact with the valve seat portion 172a of the regulating cylindrical region 172. As shown in the plan view of Figs. 3A to 3C, the emitter 120 of the present embodiment has a plurality of slits 173, and the width of each slit 173 is narrower than that of the slit 373 in the emitter of the comparative embodiment of FIG. 6. As shown in the cross-sectional view of FIG. 7A, the depth of the slit 173 (i.e., the depth of the flow path) of the emitter 120 of the present embodiment is shallower than the slit 373 of the emitter of the comparative embodiment of FIG. 7B. Therefore, in the emitter 120 of the present embodiment, the flow path formed by each slit is thinner than that of the emitter of the comparative embodiment, and the communication port formed by each slit is smaller than that of the emitter of the comparative embodiment. This allows the emitter 120 of the present embodiment to achieve a smaller Reynolds number than that of the emitter of the comparative embodiment, and the flow of the liquid, which was turbulent in the emitter of the comparative embodiment, can be made laminar.

The discharge portion 137 is a portion for discharging the liquid taken into the emitter 120 via the discharge port 112 of the tube 110, and is provided on the back surface 138 side in the emitter 120. As shown in Figs. 2B, 3B, and 3C, the base of the emitter body 122 includes a discharge recess 191 on the back surface 138 side and the downstream side of the emitter 120. In the present embodiment, the base is the bottom surface of the discharge recess 191, and the regulating through hole 174 in the regulating unit 135 is provided on the bottom surface of the discharge recess 191 and the upstream side. In the emitter 120, the space of the discharge recess 191 serves as the discharge portion 137. Specifically, when the emitter 120 is disposed in the tube 110 at a site including the discharge port 112, the space between the discharge recess 191 and the inner wall of the tube 110 becomes the discharge portion 137 communicating with the discharge port 112 of the tube 110.

The shape of the discharge recess 191 is not particularly limited, and has a substantially rectangular shape in plan view, for example. For example, as shown in Figs. 2B and 3C, the discharge recess 191 may include a plurality of protrusions 193 on its bottom surface on the downstream side of the regulating through hole 174 and on the upstream side of a site corresponding to the discharge port 112 of the tube 110. The protrusions 193 are disposed along the width direction. The protrusions 193 allow the liquid to pass therethrough and prevent foreign matters such as suspended matters in the liquid from passing therethrough, for example, as will be described below.

Next, functions of the emitter 120 and the drip irrigation tube 100 in which the emitter 120 is disposed in the tube 110 will be described.

First, an irrigation liquid is fed into the tube 110 of the drip irrigation tube 100. The irrigation liquid is not particularly limited, and examples thereof include water, liquid fertilizer, agricultural chemicals, and mixed liquids thereof. The pressure of the liquid to be fed to the tube 110 is not particularly limited, and, for example, the pressure of the liquid is preferably 0.1 MPa or less in order to perform the drip irrigation method more easily and to further prevent the tube 110 and the emitters 120 from being damaged.

The liquid introduced into the tube 110 is taken into the emitter 120 from the intake portion 131 of the emitter 120. Specifically, in the emitter 120, the liquid enters the intake recess 153 from the slit 154 or the gap between the second protrusions 156, passes through the intake through hole 152, and moves from the front surface 139 side to the back surface 138 side. When the intake portion 131 includes the screen portion 151, for example, suspended matters and the like in the liquid can be removed by the slit 154, the gap between the second protrusions 156, and the like of the screen portion 151. In addition, in the intake portion 131, for example, since the slit 154 and the gap between the second protrusions 156 have the wedge wire structure, it is possible to further suppress the pressure loss of water at the time of taking water into the intake portion 131.

The liquid taken in the intake portion 131 passes through the intake through hole 152 and reaches the connection region 132 in the flow path 143. Then, the liquid flows from the connection region 132 into the decompression region 133.

The liquid that has flowed into the decompression region 133 passes through the through hole 161 and moves to the regulating unit 135. Specifically, the liquid moves from the through hole 161 to a region between the regulating recess 171 and the regulating cylindrical region 172 in the regulating unit 135. The liquid that has moved to the regulating unit 135 passes through the regulating through hole 174 and moves to the discharge portion 137. At this time, the control of the flow rate of the liquid flowing to the discharge portion 137 by the regulating unit 135 relates to the control of the flow rate of the liquid discharged from the emitter 120 to the outside of the tube 110 via the discharge port 112 of the tube 110. Here, the control of the flow rate in the regulating unit 135 will be described with reference to FIG. 5.

The upper diagram of FIG. 5 shows a state in which the film 124 is not under pressure from the liquid in the tube 110. When pressure is applied to the film 124 by the liquid in the tube 110, the film 124 deflects in the downward direction. When a further pressure is applied to the film 124, the film 124 further deflects to come into contact with the entire circumference of the valve seat portion 172a of the regulating cylindrical region 172, as shown in the lower diagram of FIG. 5. Thereby, the opening of the regulating cylindrical region 172 is closed by the film 124 except for the plurality of slits 173. After the opening of the regulating cylindrical region 172 is closed, the liquid is discharged to the discharge port via the slits 173.

The liquid regulated by the regulating unit 135 moves from the regulating unit 135 to the discharge portion 137 via the regulating through hole 174. In the emitter 120, since the discharge portion 137 is disposed at a site corresponding to the discharge port 112 of the tube 110, the liquid that has moved to the discharge portion 137 is discharged to the outside of the tube 110 via the discharge port 112 of the tube 110.

In the emitter of the present invention, whether or not the cylindrical region is provided around the regulating through hole is not particularly limited. The cylindrical region can be used, for example, to adjust the height between the support portion defining the diaphragm portion of the film and the valve seat portion in the recess. That is, the cylindrical region may or may not be provided, for example, in accordance with a desired clearance between the support portion defining the diaphragm portion of the film and the valve seat portion in the recess. As a specific example, when it is desired to relatively delay the timing of pressure correction, for example, the bottom surface of the recess may be formed flat without providing the cylindrical region.

[Second embodiment]

The emitter of the present embodiment is characterized in that it satisfies the condition (2). Regarding the Reynolds number in the condition (2), reference can be made to the description of the first embodiment. The emitter of the present invention is only required to satisfy the condition (2), and the other configurations are not particularly limited.

Examples

Next, examples of the present invention will be described. The present invention, however, is not limited by the following examples.

Example 1

First, an emitter having the shape shown in Figs. 3A to 3C and satisfying the following conditions was assumed as an emitter of the present example.
Number of slits: 8
Size of each slit: width 0.25 mm × depth 0.035 mm
With respect to the emitter shown in Figs. 3A to 3C, the turbulence energy (J/kg) in each slit of the emitter was calculated by simulations in the case where water was allowed to pass through at a constant pressure X in a state where the film 124 was in contact with the entire circumference of the valve seat portion 172a of the regulating cylindrical region 172 while the eight slits 173 were not closed as shown in the lower diagram of FIG. 5. The temperature of the water was set at 10°C and 40°C. As a result, regardless of the temperature of the water, the turbulent energy in the slit was less than about 0.16 and the Reynolds number in the slit was 400.
Further, the flow rate per hour in the case where water was allowed to pass through at a constant pressure X was calculated. Then, assuming the flow rate V (10°C) using water at 10°C to be 1, the relative value of the flow rate V (40°C) using water at 40°C was obtained. As a result, the flow rate V (40°C) in the case of using water at 40°C was 1.38 times the flow rate V (10°C) in the case of using water at 10°C.
Next, an emitter having the shape shown in FIG.

6 and satisfying the following conditions was assumed as an emitter of a comparative example.
Number of slits: 1
Size of each slit: width 0.3 mm × depth 0.1 mm
With respect to the emitter shown in FIG. 6, the turbulence energy (J/kg) in each slit of the emitter was calculated by simulations in the case where water was allowed to pass through at a constant pressure X in a state where the film 124 was in contact with the entire circumference of the valve seat portion of the regulating cylindrical region 172 while the one slit 373 was not closed as shown in Figs. 7A and 7B. The temperature of the water was set at 10°C and 40°C. As a result, regardless of the temperature of the water, the turbulent energy in the slit was about 2.0 to 3.0 and the Reynolds number in the slit was 2100.
Further, the flow rate per hour in the case where water was allowed to pass through at a constant pressure X was calculated. Then, assuming the flow rate V (10°C) using water at 10°C to be 1, the relative value of the flow rate V (40°C) using water at 40°C was obtained. As a result, the flow rate V (40°C) in the case of using water at 40°C was 1.06 times the flow rate V (10°C) in the case of using water at 10°C.
As described above, in the emitter of the comparative example, turbulence was generated, the Reynolds number was high, and the temperature dependence of the flow rate was as low as 1.06 times even if the temperature of the water passing through was increased from 10°C to 40°C. In contrast, the emitter of the present example showed remarkable improvements such that the generation of turbulence was suppressed, the Reynolds number was low, and the temperature dependence of the flow rate was as much as 1.38 times when the temperature of the water passing through was increased from 10°C to 40°C.
Therefore, by using the emitter satisfying at least one of the conditions (1) and (2), the temperature dependence of the flow rate can be improved, which makes it possible to prevent the discharge amount from decreasing.
While the present invention has been described above with reference to illustrative example embodiments and examples, various changes and variations that may become apparent to those skilled in the art may be made without departing from the scope of the present invention. In addition, the contents described in literatures such as patent literatures and academic literatures cited in the specification of the present application are all incorporated herein by reference.
This application claims priority from Japanese Patent Application No. 2017-111774 filed on June 6, 2017. The entire subject matter of the Japanese Patent Applications is incorporated herein by reference.

Industrial Applicability

According to the emitter and the drip irrigation tube of the present invention, it is possible to suppress the variations in the discharge amount of the liquid caused by the temperature of the liquid in the drip irrigation tube.

Reference Signs List

| | |
|---|---|
| 100: | drip irrigation tube |
| 110: | tube |
| 112: | discharge port |
| 120: | emitter |
| 122: | emitter body |
| 124: | film |
| 126: | hinge portion |
| 131: | intake portion |
| 132: | connection region |
| 133: | decompression region |
| 135, 335: | regulating unit |
| 137: | discharge portion |
| 138: | back surface |
| 139: | front surface |
| 143: | flow path |
| 151: | intake screen portion |
| 152: | intake through hole |
| 153: | intake recess |
| 154: | slit |
| 155: | protrusion |
| 156: | second protrusion |
| 157: | first protrusion |
| 161: | through hole |
| 162: | protrusion |
| 171: | regulating recess |
| 171a: | support portion (edge portion) |
| 172: | regulating cylindrical region |
| 172a: | valve seat portion |
| 172b: | upper surface-side opening of through hole |
| 173: | slit |
| 174: | through hole |
| 175: | diaphragm portion |
| 191: | discharge recess |
| 193: | protrusion |
| 320: | emitter |
| 373: | slit |

**Claims**

1. An emitter to be disposed on an inner wall of a tube including a discharge port, for regulating discharge of irrigation liquid from an inside of the tube to an outside of the tube via the discharge port, comprising:

   an intake portion for taking in the liquid in the tube;
   a regulating unit that regulates a discharge amount of the liquid taken in;
a discharge portion for discharging the taken-in liquid via the discharge port of the tube; and
a flow path communicating the intake portion and the regulating unit, wherein
the regulating unit comprises:

   a recess; and
   a film,
   the film is fixed in a state of covering an inner space of the recess,
   a region of the film covering the inner space of the recess is a diaphragm portion,
   the recess has a through hole communicating with the discharge portion and a plurality of slits communicating with the through hole,
   an edge portion forming an upper surface-side opening of the through hole, excluding the plurality of slits, is a valve seat portion for the film,

in a state where the emitter is disposed in the tube,

   when no liquid is present in the tube, the diaphragm portion of the film is not in contact with the valve seat portion, and
   when the liquid is present in the tube, the diaphragm portion of the film can be in contact with the valve seat portion in accordance with a pressure of the liquid,

when the diaphragm portion of the film comes into contact with the valve seat portion, the film and the slits form communication ports to the through hole, each slit serving as a flow path to the through hole, and
the emitter satisfies at least one of condition (1) and condition (2):

   Condition (1): Assuming a cross-sectional area of the communication port formed by the film and the slit required when the emitter has one slit to be 1, a cross-sectional area of a communication port to the through hole formed by the film and each slit is less than 1; and
   Condition (2): A Reynolds number of each flow path to the through hole is 1500 or less.

2. The emitter according to claim 1, wherein the diaphragm portion is made of thermoplastic resin.

3. The emitter according to claim 2, wherein the thermoplastic resin is polyethylene.

4. A drip irrigation tube comprising:

a tube; and
an emitter, wherein
the emitter is the emitter according to any one of claims 1 to 3,
the tube includes a discharge port for discharging an irrigation liquid,
the emitter is disposed on an inner wall of the tube at a site including the discharge port, and
the discharge portion of the emitter and the discharge port of the tube correspond to each other.

<u>100</u>

<u>110</u>

<u>120</u>

112

110

FIG. 1A

<u>110</u>

<u>120</u>

FIG. 1B

FIG. 2A

FIG. 2B

FIG. 3A

FIG. 3B

FIG. 3C

172b

124   173 | 172 171                                     122

191 193 174   161

FIG. 4A

175                                              124

171a                                             171a

                                                  171

172a  L2  172a

173 | 174 172   161
172b

FIG. 4B

175                                              124

171a                                             171a

                                                  171

272a      272a
          L2

273   174 272    161
272b

FIG. 4C

FIG. 5

FIG. 6

124

171 173 172 161

FIG. 7A

124

171 373 172 161

FIG. 7B

## INTERNATIONAL SEARCH REPORT

| | International application No. |
|---|---|
| | PCT/JP2018/020360 |

**A. CLASSIFICATION OF SUBJECT MATTER**
Int.Cl. A01G25/02(2006.01)i
According to International Patent Classification (IPC) or to both national classification and IPC

**B. FIELDS SEARCHED**

Minimum documentation searched (classification system followed by classification symbols)
Int.Cl. A01G25/02

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-220578 A (ENPLAS CORPORATION) 28 December 2016, paragraphs [0023], [0035], fig. 3 & WO 2016/190168 A1 & EP 3305064 A1, paragraphs [0023], [0025], fig. 3 & CN 107613756 A & IL 255970 D | 1-4 |
| A | JP 2016-220620 A (ENPLAS CORPORATION) 28 December 2016, entire text, all drawings & WO 2016/194603 A1 & EP 3305065 A1 & CN 107613758 A & IL 255971 D | 1-4 |
| A | JP 2016-154525 A (ENPLAS CORPORATION) 01 September 2016, entire text, all drawings & US 2018/0027756 A1 & WO 2016/136695 A1 & EP 3262926 A1 & CN 107249304 A & IL 253957 D | 1-4 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August 2018 (10.08.2018) | 21 August 2018 (21.08.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010046094 A

- JP 2017111774 A